# EUROPEAN PATENT APPLICATION

(11) **EP 2 369 567 A2**
(43) Date of publication of application: **28.09.2011**
(21) Application number: 10196537.4
(22) Date of filing: 22.12.2010
(51) Int. Cl.: G09B 29/10

(54) **Information processing apparatus and information processing program**

(30) Priority: 28.12.2009 JP 2009297756; 21.12.2010 JP 2010284710
(71) Applicant: Nikon Corporation, Tokyo 100-8331 (JP)
(72) Inventor: Akiya, Hiroyuki, Tokyo 100-8331 (JP); Teramoto, Shutaro, Tokyo 100-8331 (JP); Sekiguchi Naoki, Tokyo 100-8331 (JP)
(74) Representative: Petzold, Silke

(57) **Abstract**

An information processing apparatus includes: an input means for inputting an image as an input image, the image being recorded in correlation with information related to ground point of photography; an image selection means for selecting, as selected images, a plurality of images from among the input images input by the input section; a region extraction means for extracting a map region on the basis of a number of the selected images included in a predetermined region upon the map, the predetermined region including the ground points of the selected images selected by the image selection means; and a display means for displaying the map region extracted by the region extraction means with photographic ground point signs, the photographic ground point manifesting the ground point of the selected image.

## Description

### INCORPORATION BY REFERENCE

The disclosure of the following priority application is herein incorporated by reference: Japanese Patent Application No. 2009-297756 filed December 28, 2009.

The present invention relates to an information processing apparatus and to an information processing program.

In Japanese Laid-Open Patent Publication Heisei 8-335034, the following type of search device for photographic images is disclosed. When displaying image data in which photographic position information is recorded upon a map, this search device displays the number of images that have been photographed within a specified range.

However, in the device of the related art, positions of displaying image data are split on the map, if the photographic positions of the plurality of images are separated. As a result, since a scale of the map data is set small, the user cannot check the several separated photographic positions at the same time.

According to the 1st aspect of the present invention, an information processing apparatus comprises: an input means for inputting an image as an input image, the image being recorded in correlation with information related to ground point of photography; an image selection means for selecting, as selected images, a plurality of images from among the input images input by the input means; a region extraction means for extracting a map region on the basis of a number of the selected images included in a predetermined region upon the map, the predetermined region including the ground points of the selected images selected by the image selection means; and a display means for displaying the map region extracted by the region extraction means with photographic ground point signs, the photographic ground point manifesting the ground point of the selected image.

According to the 2nd aspect of the present invention, the region extraction means in an information processing apparatus according to the 1st aspect may set split regions as the predetermined regions, and extracts a plurality of the map regions from the map on the basis of the numbers of the photographic ground point signs within the split regions, the split region having been created by splitting the map at predetermined intervals.

According to the 3rd aspect of the present invention, an information processing apparatus according to the 2nd aspect may further comprises: a number of images display means for, for each of the split regions, displaying the number of the photographic ground point signs displayed within the split region.

According to the 4th aspect of the present invention, the region extraction means in an information processing apparatus according to the 1st aspect may set a predetermined size of a region as the predetermined region, and extracts the region from the map as the map regions, the number of the selected images in the region satisfying some predetermined condition.

According to the 5th aspect of the present invention, it is preferred that, in an information processing apparatus according to any one of the 1st through 4th aspects, the map regions that are displayed by the display means can be set by a user as desired,

According to the 6th aspect of the present invention, it is preferred that in an information processing apparatus according to any one of the 1 st through 5th aspects, sizes of the map regions that are extracted from the map by the region extraction means can be set by a user as desired.

According to the 7nd aspect of the present invention, the region extraction means in an information processing apparatus according to any one of the 1st through 6th aspects may extract, as the map regions, regions for which the number of the selected images is greater than or equal to a number that has been set by a user.

According to the 8th aspect of the present invention, the region extraction means in an information processing apparatus according to any one of the 1st through 7th aspects may extract the plurality of map regions from the map while also taking into account a priority order assigned to each of the selected images within the predetermined regions upon the map.

According to the 9th aspect of the present invention, an information processing apparatus according to any one of the 1st through 8th aspects may further comprise: a change means for, on the basis of a command from the user, changing at least one of a scale of the map region displayed by the display means and a display range of the map region, on the basis of a command from a user.

According to the 10th aspect of the present invention, an information processing apparatus according to any one of the 1st through 9th aspects may further comprise: a map data acquisition means for specifying a country in which the selected images selected by the image selection means have been photographed, and acquires map data from a server in the specified country.

According to the 11th aspect of the present invention, the region extraction means in an information processing apparatus according to any one of the 1st through 10th aspects may perform extraction so that the plurality of map regions do not overlap one another.

According to the 12th aspect of the present invention, it is preferred that the region extraction means in an information processing apparatus according to the 4th aspect extracts the region from the map, as the map regions, the numbers of the selected images in the region being a greatest.

According to the 13th aspect of the present invention, the region extraction means in an information processing apparatus according to the 2nd aspect may change a size of the split regions according to level of a scale of the map being displayed.

According to the 14th aspect of the present invention, it is preferred that the region extraction means in an information processing apparatus according to the 1 st aspect sets split regions as the predetermined regions, and extracts the map region from the map on the basis of the numbers of the photographic ground point signs within the split regions, the split region having been created by splitting the map at predetermined intervals.

According to the 15th aspect of the present invention, an information processing apparatus according to the 14th aspect may further comprise: a number of images display means for, for each of the split regions, displaying the number of the photographic ground point signs displayed within the split region.

According to the 16th aspect of the present invention, a computer readable program product includes an information processing program that can be executed by the computer. The information processing program comprises: an input process of inputting, an input image as an input image, the image being recorded in correlation with information related to ground point of photography; an image selection process of selecting, as selected images, a plurality of images from among the input images; a region extraction process of extracting a plurality of map regions on the basis of a number of the selected images included in predetermined regions upon the map, the predetermined region including the ground points of the selected images selected by the image selection process; and a display process of displaying the plurality of map regions that have been extracted by the region extraction process with the photographic ground point signs,

According to the present invention, the use is able to check the several separated photographic positions at the same time,

### BRIEF DESCRIPTION OF THE DRAWINGS

Fig. 1 is a block diagram showing the structure of an embodiment of the present invention, that is a personal computer;
Fig. 2 is a first figure showing a concrete example of an image display screen;
Fig. 3 is a second figure showing a concrete example of an image display screen;
Fig. 4 is a figure showing a concrete example of a map display screen;
Fig. 5 is a first figure showing a concrete example when a mesh is displayed upon a map;
Fig. 6 is a second figure showing a concrete example when a mesh is displayed upon the map;
Fig. 7 is a first figure showing an example of split map display;
Fig. 8 is a second figure showing an example of split map display;

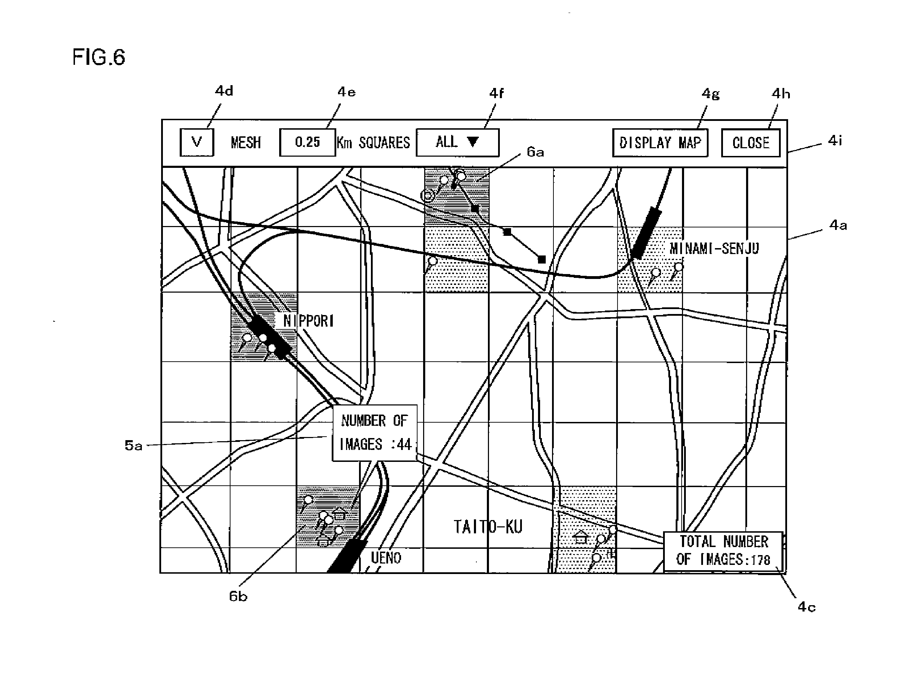

Fig. 6 is a third figure showing a concrete example when a mesh is displayed upon the map;

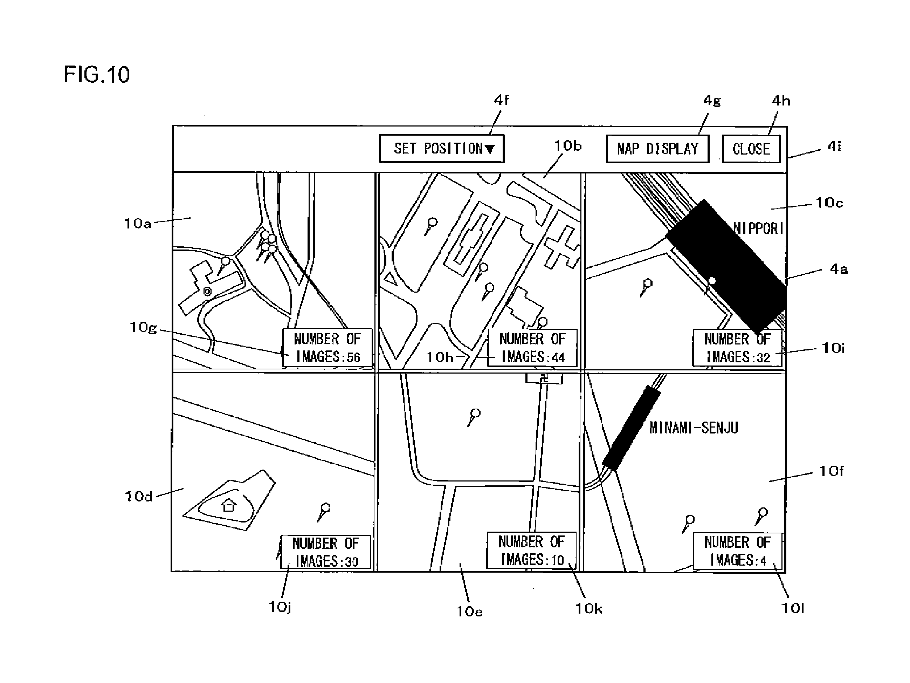

Fig. 10 is a third figure showing an example of split map display;

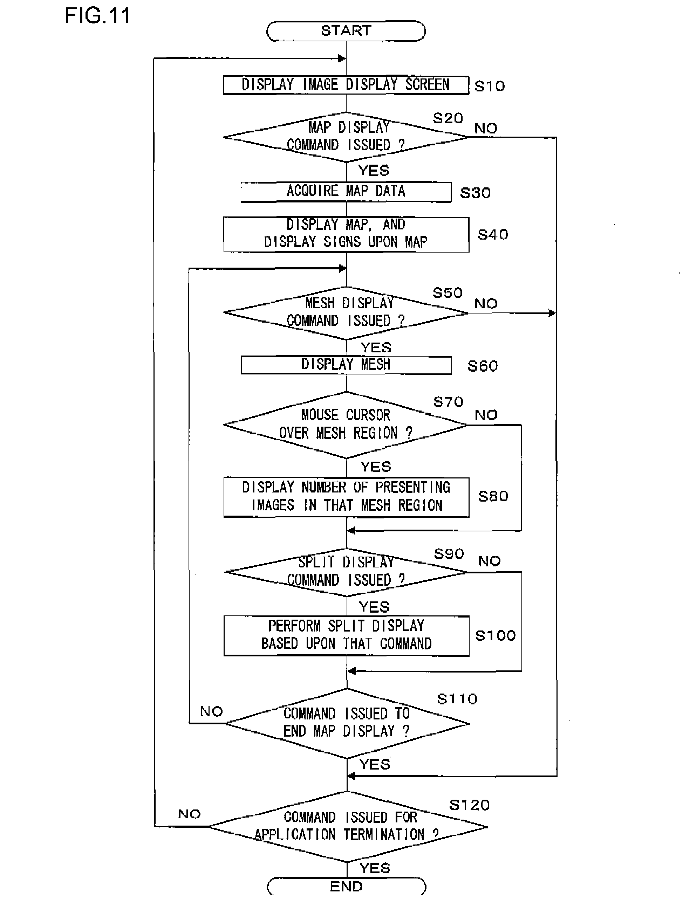

Fig. 11 is a flow chart showing processing performed by a computer 100;

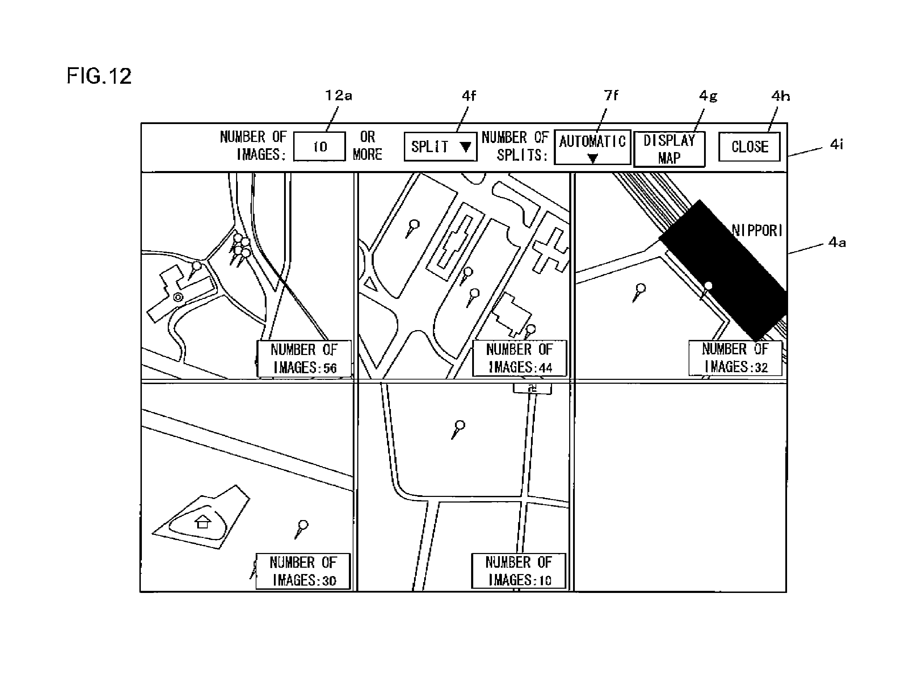

Fig. 12 is a fourth figure showing an example of split map display; and

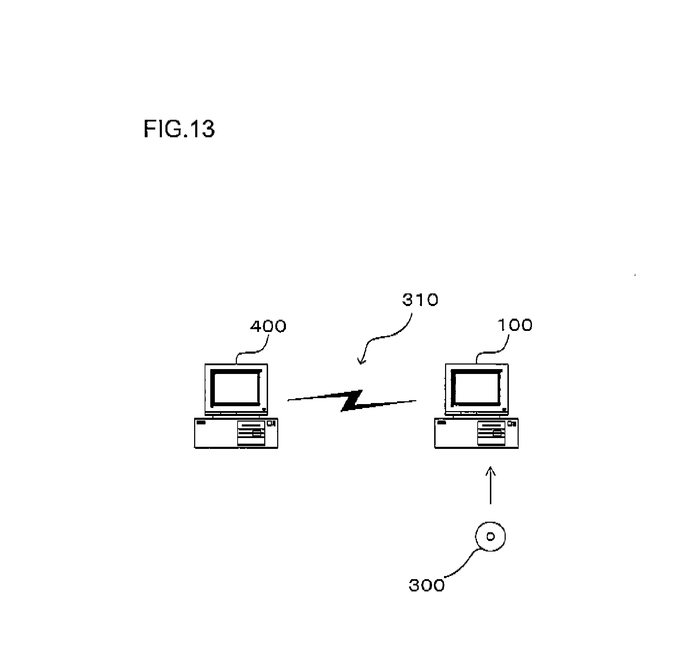

Fig. 13 is a figure for explanation of the overall structure of apparatus that is used for supplying a manufactured program product.

### DESCRIPTION OF THE PREFERRED EMBODIMENTS

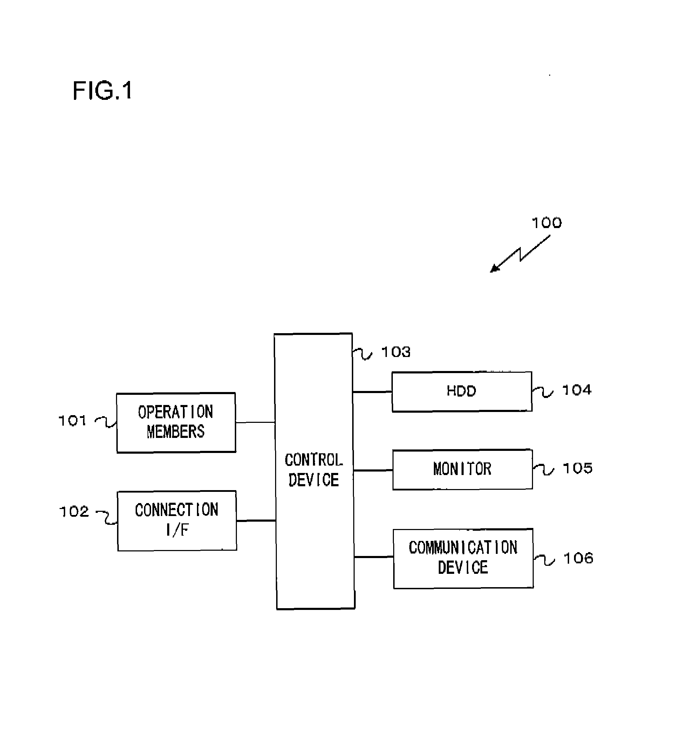

Fig. 1 is a block diagram showing the structure of an embodiment of the present invention, that is a personal computer. It should be understood that, as will be described hereinafter, in this computer 100, a control device 103 operates as an information processing apparatus by reading out and executing a program that is recorded on a HDD 104, on the basis of a command from the user.

The computer 100 includes operation members 101, a connection I/F (interface) 102, a control device 103, a HDD (hard disk drive) 104, a monitor 105, and a communication device 106.

The operation members include various devices that are actuated by the user, for example a keyboard and a mouse or the like. The connection I/F 102 is an interface for connection of an external device such as a digital camera or the like, and, for example, a USB interface for performing cable connection of a digital camera or a video camera, or a wireless LAN module for performing wireless connection, or the like may be used. The computer 100 of this embodiment, for example, inputs image file data (i.e. input images) from a digital camera via this connection 1/F 102.

In this embodiment, the digital camera that is the source for acquisition of image files is a camera that is equipped with a GPS unit, can acquire GPS information that specifies the ground point of photography as photographic ground point information during photography, and can record this information in a portion of the header of the resulting image file. This GPS information includes information about the ground point of photography, such as latitude and longitude information and so on. In other words, in an image file that is input from the digital camera to the computer 100 via the connection I/F 102, there is recorded latitude and longitude information about the ground point of photography as data that specifies its photographic ground point. Moreover, data for a thumbnail image is also recorded in a portion of this image file header, as an image to be displayed.

The HDD 104 is a recording device for recording image files that are read in via the connection I/F 102 and various programs and so on that are executed by the control device 103. For example, data is recorded in this HDD 104 for an image display program for executing the processing of Fig. 11, as will be described hereinafter. This program is supplied by being recorded upon a storage medium such as a CD-ROM or a DVD-ROM or the like. In the computer 100, the control device 103 becomes capable of executing this program by the user installing the data of the program upon the HDD 104, using this storage medium. And, as described above, by the control device 103 executing this program, the computer 100 becomes capable of functioning as an information processing apparatus according to the present invention.

The monitor 105 is, for example, a liquid crystal monitor, and displays images of data for display that are outputted from the control device 103. The communication device 106 is a device for performing communication with the exterior, for example communication with a server or the like, such as a network card for connecting the computer 100 to a LAN circuit, or a modem for connecting the computer 100 to a telephone circuit, or the like may be used. In this embodiment, as described above, the computer 100 connects to an external map server upon which map data is recorded via the communication device 106, and thereby acquires map data. For example, a map server provided by a map information supply company or the like is available and can serve as such a map server to which the computer 100 connects.

The control device 103 includes a CPU, a memory, and other peripheral circuitry, and controls the computer 100 as a whole. It should be understood that the memory included in this control device 103 may be, for example, volatile memory such as SDRAM or the like. This memory is used as a work memory for holding a program while it is being executed by the CPU, and as a buffer memory for temporarily recording data, and so on.

In this embodiment, when a command is issued for execution of an image display application, the image display application is started by the control device 103 reading out an image display program that is recorded upon the HDD 104 into SDRAM and starting it. This command for execution of the image display application is issued by the user actuating the operation members 101 that include the mouse. For example the user may issue this command for execution of the image display application by actuating the mouse and double clicking upon a shortcut icon for the image display application that is displayed upon the screen.

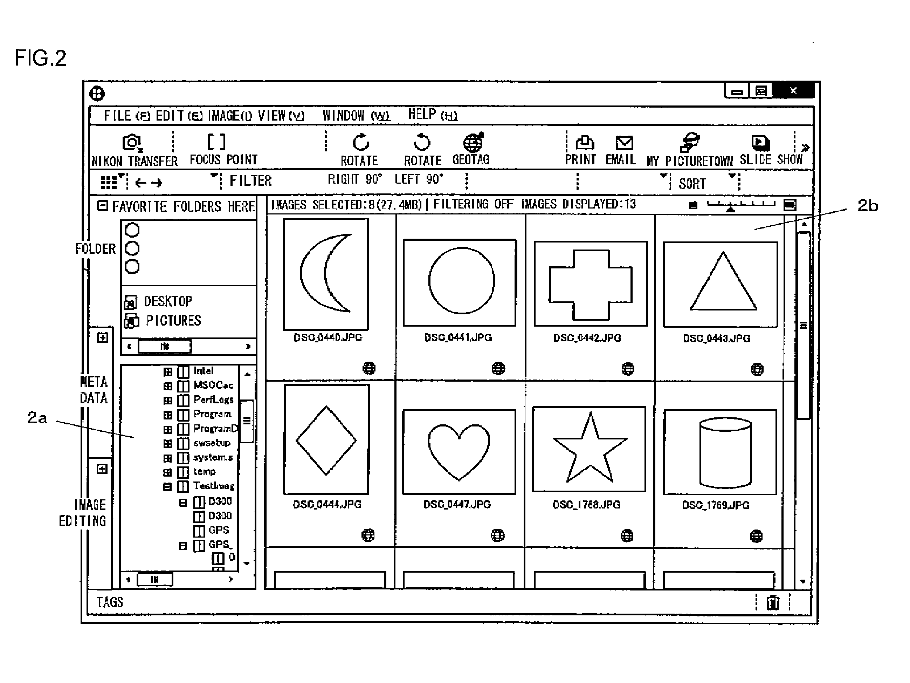

When the image display application has been started, the control device 103 displays an image display screen upon the monitor 105, as shown in Fig. 2. This image display screen includes a folder selection region 2a and a thumbnail image list display region 2b. From among the image files that are recorded upon the HDD 104, the control device 103 reads out the thumbnail images from portions of the headers of those image files that are recorded within the folder that is selected in the folder selection region 2a, and displays these thumbnail images in the thumbnail image list display region 2b.

For example, the control device 103 may automatically select a folder that is set in advance, or the folder that was selected when the application ended the previous time as the initial folder in the folder selection region 2a when the image display application is started. And the control device 103 displays, as a list, the thumbnail images of the image files that are recorded in this initial folder in the display region 2b. At this time, it may be arranged for the control device 103 to display these thumbnail images as sorted into a predetermined display order, such as for example in order of file name or in order of date and time of photography or the like; or it would also be acceptable to receive input from the user for changing the order in which the files are sorted.

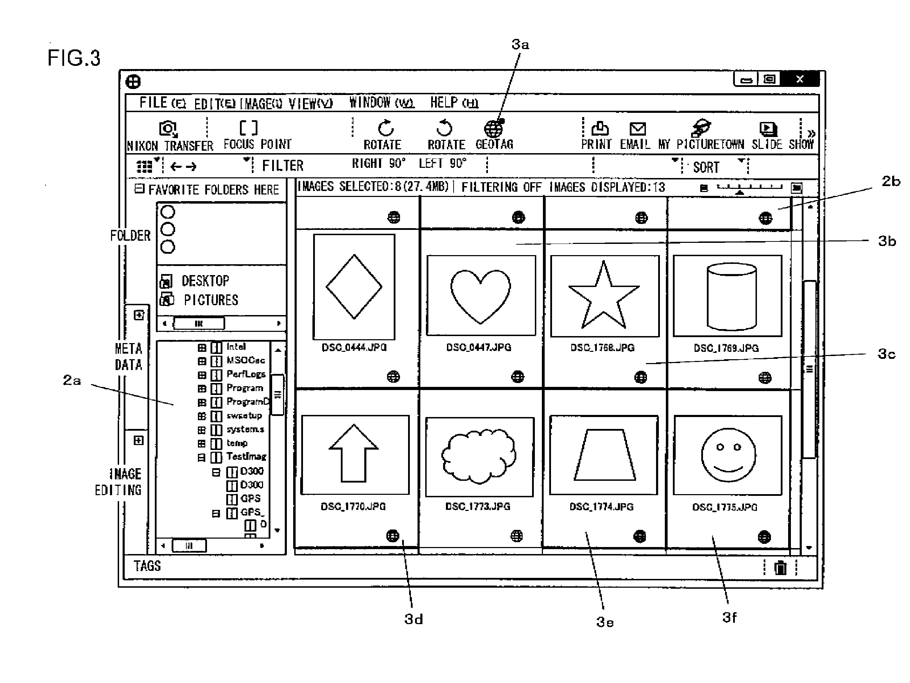

By actuating the operation members 101 that include the mouse, the user is able to select at least one thumbnail image from those images that are being displayed in the thumbnail image list display region 2b. For example, as shown in Fig. 3, the user is able to select a plurality of thumbnail images 3b through 3f. After having selected at least one of the thumbnail images that are being displayed in the thumbnail image list display region 2b, by pressing the map display button 3a that is allocated for issuing the map display command, the user is able to issue a command for a map to be displayed on the monitor 105 spanning a range that includes the photographic ground point or points of the selected image or images.

When the map display command described above has been issued by the user, the control device 103 connects to the external map server via the communication device 106, and requests the map server to which connection has been established to transmit map data. This map data for which the control device 103 has transmitted a request is map data covering a range including all of the ground points of photography of all of the images that were selected by the user (i.e. the selected images). It should be understood that the information that is required for connection to the map server, such as for example the URL or the IP address of the map server or the like, is recorded in advance in flash memory or upon the HDD 104.

In this embodiment, upon receipt of this map data request signal in which latitude and longitude information of some ground point is included, the map server specifies the ground point on the basis of this latitude and longitude information, and supplies the service of transmitting map data for a range that includes this ground point. Moreover, if a map data request signal to which latitude and longitude information is appended for a plurality of ground points has been received, then, on the basis of this latitude and longitude information, the map server supplies the service of transmitting map data for a range that includes all of these ground points that have been requested.

For this, in this embodiment, the control device 103 appends latitude and longitude information for the photographic ground point of each of the images that have been selected by the user to the map data request signal, and transmits this map data request signal to the map server. On the basis of this request from the computer 100, the map server transmits to the computer 100 map data for a range that includes all of these photographic ground points that the map server has received. At this time, if map data at a plurality of scales is available as this map data over ranges including all of the photographic ground points that the map server has received, then, among this map data at a plurality of scales, the map server transmits to the computer 100 the map data for the largest scale. For example, if the photographic ground points are scattered all over Japan, then map data at the maximum scale that includes a map of all of Japan is selected and transmitted.

By the control device 103 receiving the map data that has been transmitted from the map server, it is possible for the computer 100 to acquire this map data for a range that includes all of the photographic ground points of all of the images selected by the user. It should be understood that if no information related to the ground point of photography is recorded among the image files that correspond to the thumbnail images selected by the user upon the image display screen, the control device 103 excludes these image files as subjects for processing.

It should be understood that while, in the above explanation, it was arranged for the map data to be recorded upon an external map server, it would also be acceptable to arrange for the map data to be stored upon the HDD 104, and for the control device 103 to acquire this map data stored upon the HDD 104. Furthermore, if the entity that supplies this image display application according to the present invention owns its own map server, then it would be acceptable to arrange for the control device 103 to acquire map data by accessing this in-house map server.

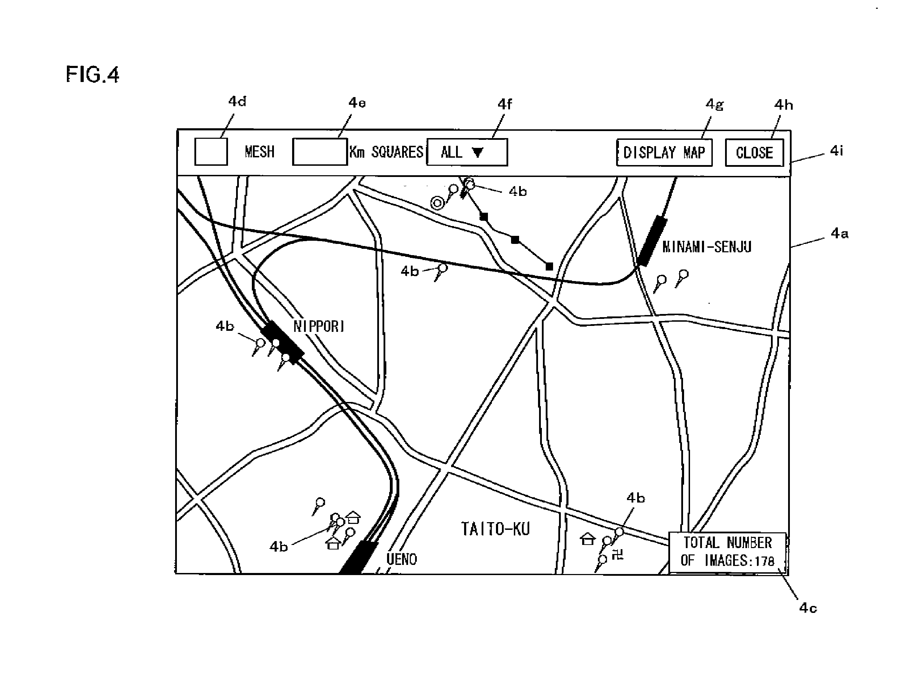

The control device 103 outputs to the monitor 105 a map display screen such as shown in Fig. 4. This map display screen includes a map display field 4a and an operation field 4i. The control device 103 outputs the map data that has been received from the map server within the map display field 4a, and thus displays in the map display field 4a a map of a range that includes all of the photographic ground points of all of the images that were selected by the user. And, in the position on the map that corresponds to the photographic ground point of each of the images, the control device 103 displays a sign 4b (a photographic ground point sign) that indicates that this ground point is the photographic ground point of an image. It should be understood that, in Fig. 4, marks shaped like pins are displayed for the signs 4b. Furthermore while a mark is displayed for each of a plurality of numbers of photographic ground points in Fig. 4, the reference symbol "4b" is only appended to five representative ones of these points, in order not to crowd the drawing unnecessarily.

Furthermore, at the lower right of the map display field 4a, the control device 103 displays the number 4c of images that have been photographed at ground points within the map that is being displayed in the map display field 4a. The user is able to change the display range of the map that is being displayed in the map display field 4a by enlarging it, shrinking it, or scrolling it. If the user performs actuation to enlarge, shrink, or scroll the map, then the number 4c of images that have been photographed at ground points within the map that is being displayed in the map display field changes. Accordingly, if any of the map operations described above has been performed by the user, the control device 103 changes the number 4c of images to correspond to the map that is to be displayed after this operation has been completed.

The user is able to close the map display screen by clicking on the button 4h "close" that is displayed in the operation field 4i. Moreover, by actuating a pop-up menu 4f for "map display method selection" that is displayed in the operation field 4i, the user is able to select any one of "all", "split", or "designated positions". If "all" has been selected with the "map display method selection" pop-up menu 4f, a complete map for the entire range that includes all of the photographic ground points for all of the images selected by the user is displayed in the map display field 4a, as shown in Fig, 4. It will be described hereinafter what is done if "split" or "designated positions" has been selected with the "map display method selection" pop-up menu 4f.

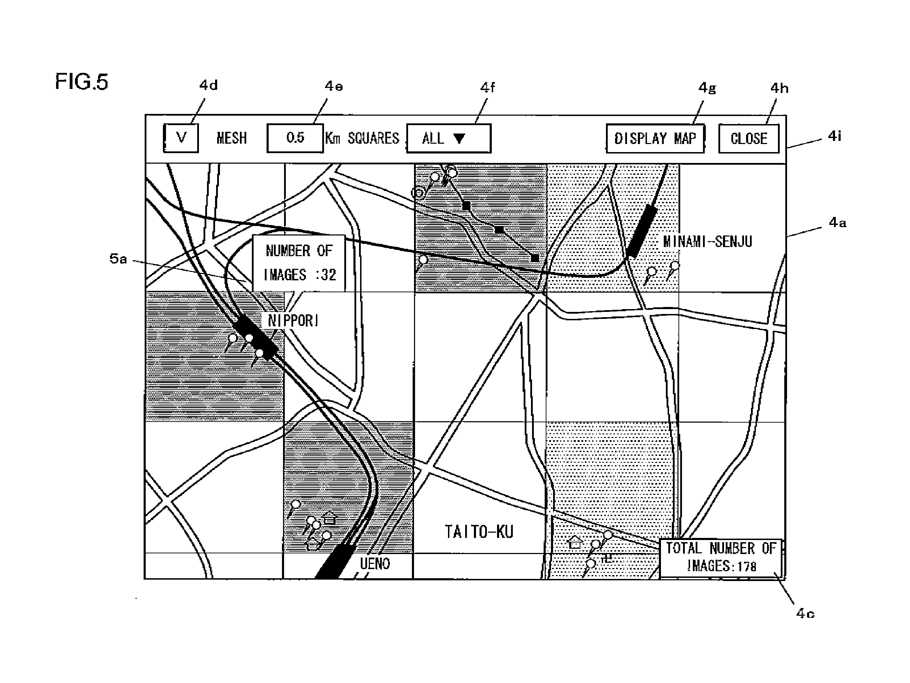

A check box 4d and a text box 4e are displayed in the operation field 4i. The check box 4d is a check box for setting whether or not to display the map being displayed in the map display field 4a as split into predetermined regions. And the text box 4e is a text box for specifying the size (i.e. the mesh size) of each of these split regions (mesh regions). After the user has put a check into the check box 4d, and input a distance for the side of the square of each mesh region into the text box 4e, he clicks upon the "display map" button 4g in the operation field 4i. Then, as shown in Fig. 5, the control device 103 displays the map in the display field 4a with an overlaid mesh corresponding to the distance input to the text box 4e. For example, in the case shown in Fig. 5, the map is displayed with an overlaid mesh of square frames, with the sides of the square mesh regions being all 0.5 km in length.

And the control device 103 distinguishes between these mesh regions according to the number of photographic images whose photographic ground points are located within them (i.e. according to the number of presenting images), in other words according to the number of photographic ground point signs that are being displayed within each of the mesh regions. For example, the greater is the number of presenting images within a mesh region of the map, the denser may be the transparency of red color displayed over this mesh region. Furthermore, if the user hovers the mouse cursor over some mesh region, the control device 103 displays a pop-up 5a in blown-out format showing the number of presenting images within this mesh region. It should be understood that in Fig. 5, for the sake of convenience, the density of the dots shown in each mesh region is greater, the more presenting images are in that mesh region.

The user is able to change the display range by scrolling the map even after having displayed a mesh. If the map is scrolled by the user during display of a mesh, the control device 103 scrolls only the map without moving the position of the mesh that is being displayed. Since due to this the number of images present within each mesh region changes, the transparency of the display state within each mesh region and the number of presenting images shown therein also change in real time on the basis of this number of images.

Furthermore, the user is also able to change the mesh size even in the state in which the display of a mesh is already being provided. In this case, the user may change the mesh size within the text box 4e of the operation field 4i and then click the "display map" button 4g. For example, as shown in Fig. 6, he may change the mesh size to 0.25 km, and then the size of the sides of each square region of the mesh changes so as to become 0.25 km. Together with this, the control device 103 also changes the state of transparency of the display over each mesh region and the number of presenting images therein.

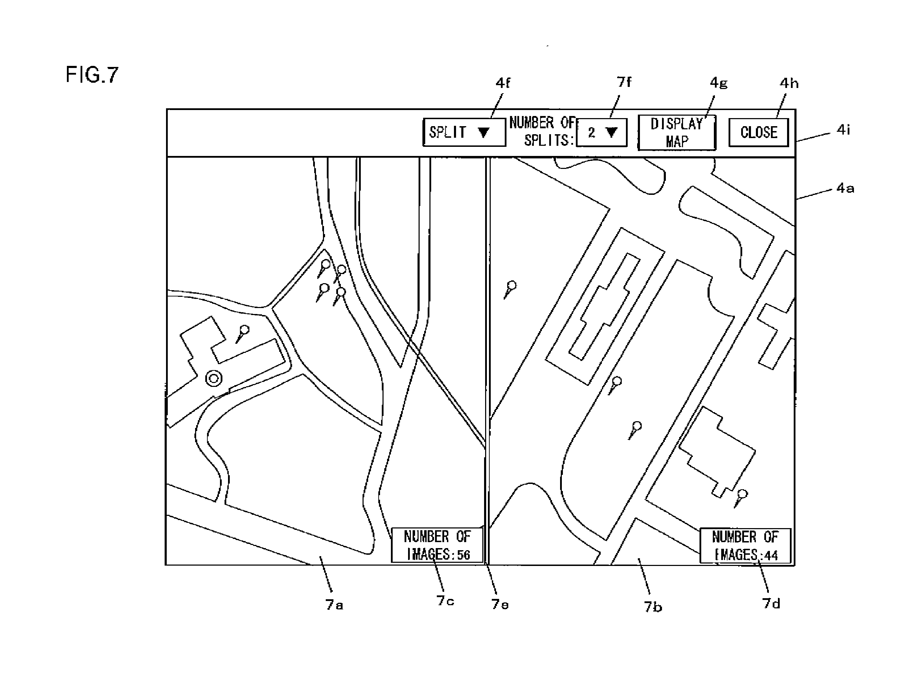

As shown in Fig. 7, when the user selects "split" from the pop-up menu 4f for "map display method selection" displayed in the operation field 4i, the control device 103 displays a "number of splits" pop-up menu 7f next to that pop-up menu 4f, for selecting the number of splits. This "number of splits" pop-up menu 7f is for designating the number of regions into which the map in the map display field 4a should be split for display, or, to put it in another manner, is for designating the number of split map regions to be displayed in the map display field 4a. In this case, the user is able to select any number that he desires for the number of splits from among several options, for example from 2, 4, 6, and so on. By clicking on the "display map" button 4g after having designated a number of split with this "number of splits" pop-up menu 7f, the user is able to issue a command for the map to be displayed in the map display field 4a while being split up into the number of regions that he has designated.

Fig. 7 shows an example of this type of split display, for the case in which "2" has been selected as the number of splits upon the "number of splits" pop-up menu 7f. In Fig. 7, the map display field 4a is split into two regions: a left side region 7a and a right side region 7b. When the user issues a command to split up the map display field 4a, the control device 103 performs processing for split display in the following manner. First the control device 103 selects just that number of mesh regions that has been set as the number of splits to be performed using the "number of splits" pop-up menu 7f, in order from that mesh region for which the number of presenting images is the greatest among the mesh regions set on the map that is currently being displayed in the map display field 4a at the time point of issue of the command for splitting. And then the control device 103 displays the maps of the mesh regions that have thus been selected within the map display field 4a as a split display.

For example, in the case shown in Fig. 7, since the number of splits that has been designated is 2, the mesh region in which the number of presenting images is the greatest (for example the mesh region 6a in Fig. 6) and the mesh region in which the number of presenting images is the second greatest (for example the mesh region 6b in Fig. 6) are selected. And the control device 103 divides the map display field 4a into two, and displays a map of the mesh region 6a within the left side region 7a with its scale changed to match the size of that left side region 7a, while displaying a map of the mesh region 6b within the right side region 7b with its scale changed to match the size of that right side region 7b. Furthermore, the control device 103 displays upon these maps the number of images whose photographic ground points are present within the ranges of each of the regions 7a and 7b that are being displayed, in other words the numbers of presenting images 7c and 7d in those regions. While this feature is not shown in Fig. 7, it would also be acceptable to provide an option to display, on this split map, for example, lists of the thumbnails of the images that are present in semi-transparent format. Moreover it would also be acceptable to arrange to display a thumbnail of the corresponding image, when the mouse cursor is hovered over one of the pins.

It should be understood that, while the control device 103 initially divides the map display field 4a at its center so as to split it into the left side region 7a and the right side region 7b that are of equal size, the user is able to change the sizes of these two regions by shifting the separator 7e that is the boundary line in the vertical direction between them. Moreover, the user is able to perform individual map operations such as increase or decrease of the scale or scrolling or the like even only upon the map that is being displayed in the left side region 7a or only upon the map that is being displayed in the right side region 7b, and the control device 103 changes the number of presenting images 7c or 7d according to these map operations.

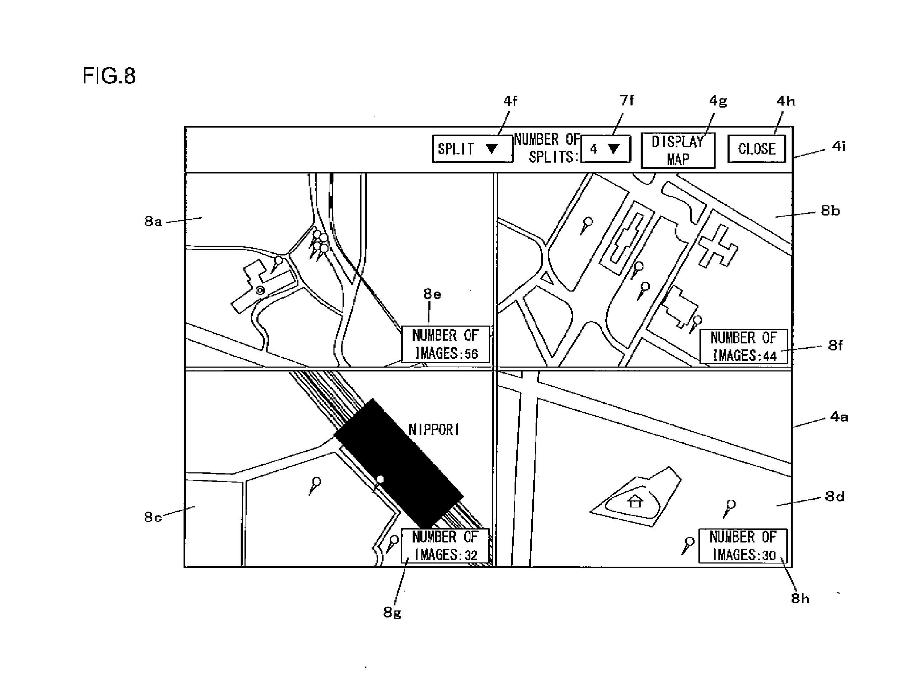

On the split map display shown in Fig. 7, the user is able to change the number of maps into which the map is split up by using the "number of splits" pop-up menu 7f. If for example he changes the number of splits to 4, the control device 103 splits four regions 8a through 8d off from the map display field 4a, and displays each of maps of four mesh regions in which the four highest numbers of presenting images are included, in each of those four regions respectively, as shown in Fig. 8. Furthermore, the control device 103 displays the numbers of presenting images 8e through 8h in the corresponding region upon the map for each of these regions.

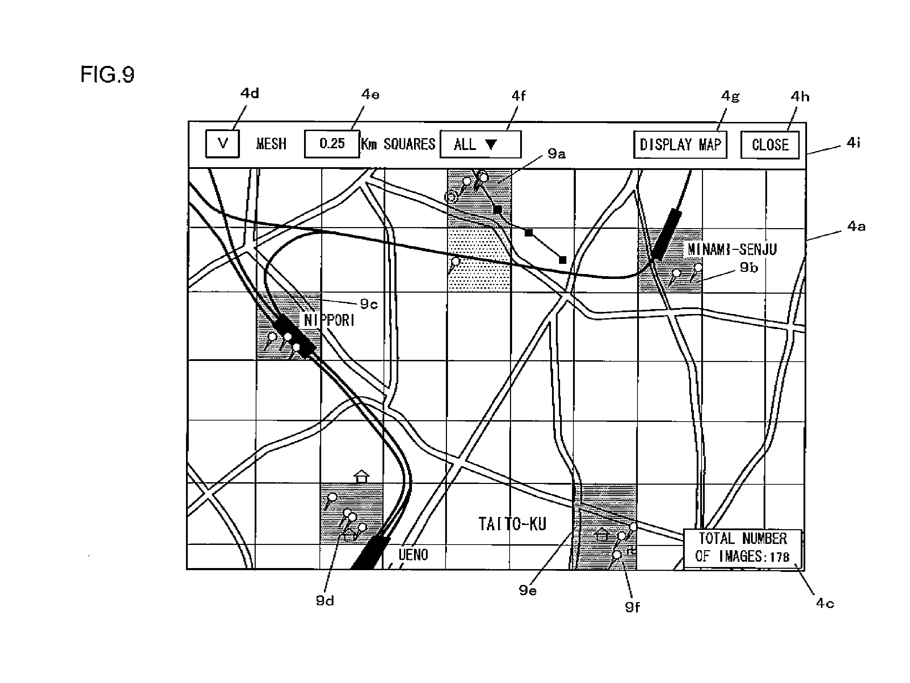

During this split map display, not only is the method available to the user of only selecting the number of split mesh regions designated with the "number of splits" pop-up menu 7f in order from that mesh region in which the number of presenting images is the greatest, and performing split display of maps for those selected mesh regions in the map display field 4a, but also there is a method available for the user to individually select the mesh regions that he desires to display. In concrete terms, in the split display state shown in Fig. 7 or Fig. 8, the user is able to return to the mesh display state shown in Fig. 9 by selecting "complete" on the "map display method selection" pop-up menu 4f in the operation field 4i, and by then clicking upon the "display map" button 4g in the operation field 4i.

Then the user is able to select those mesh regions for which he desires to perform split display upon the map shown in Fig. 9, by clicking on them with the mouse. It is possible for the user to select a plurality of mesh regions; for example, he is able to select a plurality of mesh regions by repeatedly clicking on them with the mouse while holding down the control key upon the keyboard. Furthermore, he is also able to cancel a selection, for example by clicking again with the mouse upon a mesh region that he wishes to eliminate from the selection while holding down the control key. Moreover, if he change the selection to some other mesh region, he may click with the mouse on that other mesh region without accompanying that click with any keyboard operation. By displaying the mesh regions that have been selected by the user with transparent blue color overlaid upon them, the control device 103 is able to display them so that the user can tell them apart from other mesh regions. For example, in the case shown in Fig. 9, the mesh regions 9a through 9f are selected. It should be understood that in Fig. 9, for the sake of convenience, fine patterns of dots are shown as overlaid upon those mesh regions that have been selected by the user.

The user selects the mesh regions of the mesh display in the map display field 4a for which he desires to perform split display upon the map. Next, the user selects "designated positions" on the "map display method selection" pop-up menu 4f in the operation field 4i. And then the user clicks upon the "display map" button 4g. By the operations described above, the user is able to issue a command for split display to be performed upon the map with the selected mesh regions as subjects. And, when this operation is performed by the user, the control device 103 displays maps of the mesh regions that were selected by the user in the regions 10a through 10g in the map display field 4a after automatically adjusting the corresponding scales, as shown in Fig. 10. In this case as well, the control device 103 displays upon the map the numbers of presenting images 10g through 101 in each of the regions.

During split display of maps for mesh regions selected by the user in this manner, if the number of mesh regions that have been selected is too great, there is a possibility that split display of the maps will become difficult to see. In this type of case, it will be acceptable for an upper limit value to be imposed internally upon the number of splits for the map display field 4a, and for the control device 103 to display a warning message dialog and to cancel the split display if the number of mesh regions that have been selected is greater than that limit value.

Fig. 11 is a flow chart showing processing performed by the computer 100 of this embodiment of the present invention. The processing shown in Fig. 11 is executed by the control device 103 as a program that starts when a command is issued by the user for execution of the image display application.

In a step S10, the control device 103 displays the image display screen shown in Fig. 2 upon the monitor 105, and then the flow of control proceeds to a step S20, In this step S20, the control device 103 decides whether or not a command has been issued to display the map display screen. In other words, as shown in Fig. 3, the control device 103 decides whether or not the map display button 3a has been depressed by the user with at least a single thumbnail image displayed in the thumbnail image list display region being selected. If the control device 103 decides that the result of the decision in the step S20 is negative, the flow of control is transferred to a step S120 that will be described hereinafter. But if the control device 103 decides that the result of the decision in the step S20 is affirmative, the flow of control proceeds to a step S30.

In this step S30, the control device 103 connects to the external map server via the communication device 106, and requests that external server to transmit map data for a range including all of the photographic ground points of all of the images that have been selected by the user. And, by receiving the map data that is transmitted from the server, the control device 103 acquires map data for a range at the maximum scale that includes all of the photographic ground points for all of the images selected by the user. Then the flow of control proceeds to a step S40, in which the control device 103 displays a map within the display field 4a on the basis of the map data that has been acquired. Furthermore, the control device also displays signs 4b upon that map, and the number 4c of images that have been photographed at ground points that lie within the map. Then the flow of control proceeds to a step S50.

In the step S50, the control device 103 decides whether or not a command has been issued to display a mesh upon the map. In other words, the control device 103 decides whether or not the user has clicked upon the "display map" button 4g in the operation field 4i after he has put a check into the check box 4d and input a distance for the sides of the squares of the mesh region in the text box 4c, as shown in Fig. 4. If the control device 103 decides that the result of the decision in this step S50 is negative, the flow of control is transferred to the step S120 that will be described hereinafter. But, if the control device 103 decides that the result of the decision in this step S50 is affirmative, the flow of control proceeds to a step S60, in which the control device performs display of a mesh upon the map as shown in Fig. 5 or Fig. 6, and then the flow of control proceeds to a step S70.

In this step S70, the control device 103 decides whether or not the mouse has been actuated by the user to shift the mouse cursor over one of the mesh regions. If the control device 103 decides that the result of the decision in this step S70 is affirmative, then the flow of control proceeds to a step S80. In the step S80, as shown in Fig. 5, the control device 103 displays a pop-up display in which the number of presenting images 5a in that mesh region is blown up, and then the flow of control proceeds to a step S90. But if the control device 103 decides that the result of the decision in this step S70 is negative, the flow of control is transferred to a step S90.

In this step S90, the control device 103 decides whether or not a command has been issued by the user for split display of the map, as described above with reference to Figs. 7 through 10. And, if the control device 103 decides that the result of this decision in the step S90 is affirmative, the flow of control proceeds to a step S100. In the step S100, on the basis of the command from the user, the control device 103 splits up the image display field 4a as shown in Figs. 7, 8, and 10 and performs split map display by displaying a map within each region, and then the flow of control proceeds to a step S110. But if the control device 103 decides that the result of this decision in the step S90 is negative, the flow of control is transferred directly to the step S110.

In this step S110, the control device 103 decides whether or not a command has been issued to end the display of the map display screen. In other words, the control device 103 decides whether or not the button "close" 4h upon the map display screen has been depressed due to operation by the user of the operation members 101. If the control device 103 decides that the result of this decision in the step S110 is negative, the flow of control is returned to the step S50 and the processing described above is repeated. But if the control device 103 decides that the result of this decision in the step S90 is affirmative, the flow of control is transferred to the step S120.

In this step S120 the control device 103 decides whether or not a command has been issued to terminate this image display application due to operation by the user of the operation members 101. If the control device 103 decides that the result of this decision in the step S120 is negative, the flow of control is returned to the step S 10 and the processing described above is repeated. But if the control device 103 decides that the result of this decision in the step S120 is affirmative, this processing flow terminates.

According to this embodiment of the present invention as explained above, the following beneficial operational effects may be obtained,
(1) The control device 103 displays upon the image display screen the signs 4b that indicate the ground points of photography of images upon the map that includes the ground points of photography of images specified by the user. And, on the basis of a command from the user, it is arranged for a mesh to be displayed on the map, and for split display of maps within mesh regions based upon the number of images photographed within each mesh region to be performed. Due to this, at the same time, the user is able to check several detailed maps of several photographic positions that are physically separated.
(2) It is arranged for the control device 103 to select from the mesh regions established upon the map that is being displayed in the map display field 4a, as the mesh regions to be displayed in split format, just that number of regions that has been set with the "number of splits" pop-up menu 7, in order from that mesh region for which the number of presenting images is the greatest, and to display maps for those selected mesh regions in split format in the map display field 4a. Due to this, it is possible to provide a split display that includes those maps within the range for which the number of images photographed is the greatest.
(3) It is arranged for the control device 103 to take as a subject any mesh region over which the mouse cursor is hovered, and to provide a pop-up display in blown-out format of the number 5a of presenting images in that mesh region. Due to this, the user is able easily to ascertain the number of images that have been photographed within each mesh region.
(4) It is arranged for the control device 103 to provide split display of the number of maps set with the "number of splits" pop-up menu 7f. Due to this, it is possible for the user to designate the number of maps to be included in the split display according to his desires.
(5) It is arranged for the control device 103 to display a mesh upon the map of the mesh size that has been set with the text box 4e, and to perform split display of maps based upon this mesh unit. Due to this, the user is able to specify the size of map range for performance of split display according to his desires.
(6) It is arranged for the control device 103 to change, on the basis of a command from the user, at least one of the scale of one of the maps that are being split displayed, and the display range of one of those maps. Due to this, the user is able to perform map operations after having set up the split display.

### - A variant embodiment -

It should be understood that the computer of the embodiment described above may be varied in the following ways.
(1) In the embodiment described above an example has been explained in which, if the mouse cursor is hovered by the user over some mesh region, the control device 103 displays the number 5a of presenting images within that mesh region in a pop-up display in blown-out format, as shown in Fig. 5. However, it would also be acceptable to arrange for the control device 103 to display the number of presenting images in each of the mesh regions continuously.
(2) In the embodiment described above, it was arranged for the user to be able to command split display of maps within the map display field 4a by selecting "split" in the "map display method selection" pop-up menu 4f and by designating a number of splits to be provided with the "number of splits" pop-up menu 7f, or by selecting "designated positions" in the "map display method selection" pop-up menu 4f and by designating those mesh squares that he desires to include in the split display. However, it would also be acceptable to arrange to provide a split display by the method described below.

First, as shown in Fig. 12, the user selects "split" with the "map display method selection" pop-up menu 4f in the operation field 4i, and selects "automatic" with the "number of splits" pop-up menu 7f. When this "automatic" selection is made by the user, a text box 12a is displayed in the operation field 4i, in which he is able to input a number of images. In this text box 12a, the user inputs a lower limit for the number of presenting images that he specifies to be present in a mesh region that is to be the subject of split display. Due to this the user is able to designate, as the mesh regions that are to be the subjects of split display, those mesh regions for which the number of presenting images is greater than or equal to the number that he has input in the text box 12a.

After this, when the user clicks upon the "display map" button 4g in the operation field 4i, the control device 103 specifies those mesh regions for which the number of presenting images is equal to or greater than the number of images input in the text box 12a, as the mesh regions to be the subject of split display. And the control device 103 splits off that numbers of the split regions as the numbers of the specified mesh regions from the map display field 4a, and displays maps for these specified mesh regions within the split regions of the map display field 4a. It should be understood that, in the example shown in Fig. 12, by inputting "10" in the text box 12a, mesh regions in which the numbers of presenting images are 10 or more should be shown in the split display in the map display field 4a. Due to this, the user is able to set the mesh regions that are to be the subjects for split display on the basis of the numbers of presenting images in mesh regions.

It should be understood that, in this case as well, there is a possibility that the number of mesh regions that satisfy the specified condition may be too great that it may become difficult to view it on the split map display. Accordingly it will be acceptable to impose an upper limit value internally upon the number of split mesh regions to be shown in the map display field 4a, and for the control device 103 to display a warning message dialog and then to cancel the split map display if the number of selected mesh regions exceeds this upper limit value. Furthermore it would also be acceptable to arrange for the control device 103 to specify an upper limit value for the number of split display regions as the number of mesh regions that are to be the subjects of split display, and to display maps for that number of mesh regions in the split display, if the number of mesh regions that satisfy the condition is too large. In this case, the control device 103 may specify a number of mesh regions equal to the upper limit value of mesh regions for split display, in order downwards from that mesh region for which the number of images present is the greatest among those mesh regions for which the number of presenting images is greater than the lower limit number that the user has input in the text box 12a.
(3) In the embodiment described above an example was explained in which, in order to acquire the map data, the control device 103 connected via the communication device 106 to an external map server upon which the map data was recorded, for example to a map server owned by a map information supply company. In this case, if the map information supply company has map servers in a plurality of regions, for example a plurality of map servers in a plurality of countries or a plurality of map servers in a plurality of states or provinces, it is desirable for the control device 103 to specify the region in which the images have been photographed, and to acquire the map data from the map server for the specified region.
   In other words, generally, if a map information supply company has installed map servers in a plurality of regions, it is often the case that while each map server holds very detailed map data (i.e. map data at large scale) for the region in which it is installed, on the other hand the map data that it holds for the other regions is more coarse (i.e. the scale of that map data is small). Due to this if the map data is acquired from a map server that is located in a region other than the region in which the images upon that map were photographed when displaying a map, there is a possibility that a rather rough map may be displayed, and this is undesirable, By contrast, if the map data is acquired from the map server that is located in the region in which the images were photographed, it is possible to display a very detailed map.
(4) In the embodiment described above, an example was explained in which, when displaying a mesh upon the map and performing split display of maps, the control device 103 performed split display by selecting just the number of split mesh regions that was specified with the "number of splits" pop-up menu 7f, in order from that mesh region for which the number of presenting images was the greatest downwards. However, it would also be acceptable to arrange for the control device 103 to set a frame region of a predetermined size upon the map, and to extract from the map regions for which the number of images photographed within the frame region satisfies some predetermined condition while shifting that frame region upon the map, and then to perform split display of the maps that have been extracted. In this case, as the predetermined condition, the five regions for which the number of presenting images is the greatest, or the regions for which the number of presenting images is greater than or equal to a predetermined number, or the like may be contemplated. When extracting the regions that satisfy the predetermined condition, it will be acceptable to arrange for the control device 103 to scan the frame region over the map, and to extract the regions for which the number of presenting images within that frame region is the greatest. It will be also acceptable to arrange for the control device 103 to scan the frame region over the map, and to extract the plurality of the regions in order downwards from that frame region for which the number of presenting images is the greatest when extracting the regions that satisfy the predetermined condition, It should be understood that, for the size of this frame region, a plurality of frame regions of predetermined size may be prepared in advance; or it would also be acceptable to arrange for the user to be able to set the size of this frame region according to his desires.
   Furthermore, while the control device 103 sets the frame region of the predetermined size in the above description, it would be acceptable for the control device 103 to extract a predetermined size of a region from the map with the region in which the number of photographed images satisfies the predetermined condition, and not to set the frame region.
(5) While, in the embodiment described above, mesh regions were selected for split display according to the numbers of presenting images in those mesh regions, it would also be acceptable to arrange to take into account the degree of importance of those images, on the basis of information held in the images. For example, it would be acceptable to quantify ratings that those images hold as meta data, to calculate values for evaluation by multiplying together the number of rating points for each of the images one by one, and to determine levels of priority for split display according to the totals of the values for evaluation of the images photographed in each mesh region. Or, it would also be acceptable to arrange to determine a level of priority for split display by performing photographic subject recognition for the subjects of the images, and by calculating the number of presenting images by taking, as the subjects for calculation, only images for which it has been decided that a person has been photographed in that image. Furthermore, it would also be acceptable to arrange to specify the photographic positions in advance for each country, and, for example, to determine a priority order for split display by taking, as the subjects for calculation of the number of presenting images, only those images that were photographed within Japan. Yet further, it would also be acceptable to arrange to set a higher priority order for images that correspond to thumbnail images that were selected (in the step S20 of Fig. 11) by the user when displaying the map.
(6) In the embodiment described above, an example has been explained in which drawings formed in the shapes of pins are displayed as signs that indicate the ground points of photography upon the map, like the signs 4b shown in Fig. 4. However this is not to be considered as being imitative of the present invention; for example, it would also be acceptable to arrange to display drawings of other shapes, or thumbnail images, or letters or the like as these signs.
(7) In the embodiment described above, it would also be acceptable to arrange for the mesh sizes that can be selected with the text box 4e in the operation field 4j to be changed according to the scale of the map that is displayed in the map display field 4a. For example, the control device 103 may vary the mesh sizes that can be selected, according to whether the map that is being displayed in the map display filed 4a is a map of the entire Tokyo area, or is a map of the entire Arakawa-ku area. In concrete terms, for example, if a map of the entire Tokyo area is being displayed in the map display field 4a, it may be arranged for the mesh sizes that can be selected to be "10 km", "20 km", .... , while, if a map of the entire Arakawa-ku area is being displayed in the map display field 4a, it may be arranged for the mesh sizes that can be selected to be "0.25 km", "5 km", .....
(8) While, in the embodiment described above, the control device 103 specified the mesh regions that were to be the subjects for split display so that they did not overlap one another, it would also be acceptable for one or more of the mesh regions that are to be the subjects of split display to overlap some other region or regions.
(9) While, in the embodiment described above, the control device 103 selects the plurality of mesh regions in accordance with the number of the photographed images presented in the map, and displays the maps of the selected mesh regions as the split display. However, it would be acceptable for the control device 103 to select only one mesh region in accordance with the number of the photographed images in the map and to display the map of the selected mesh in a large scale.
(10) In the embodiment described above, if the control device 103 scans the frame region over the map, and extracts the regions for which the number of presenting images within that frame region is the greatest, it is acceptable for the control device 103 to display the extracted regions so that the displayed extracted regions are visible.
(11) In the embodiment described above, after at least one of the image is selected, the control device 103 displays the map data upon the monitor 105 with the map data including all of the photographic ground points of all of the images that have been selected. And the control device 103 selects the mash regions in accordance with the number of the presenting images in the mesh region. However, after the image is selected, the control device 103 selects the mesh regions in accordance with the number of the presenting images in the mesh region without displaying the map data upon the monitor 105 with the map data including all of the photographic ground points of all of the images that have been selected. In this case, if at least one of the images is selected, the control device 103 can display the map as split display as shown in Fig, 7, or display one mesh region. Furthermore, after the image is selected, it would be acceptable for the control device 103 to display only a part of the map without displaying the map data upon the monitor 105 with the map data including all of the photographic ground points of all of the images that have been selected. In this case, in accordance with the number of the presenting images in the mesh region, the control device 103 may select the mesh regions from the map data including all of the photographic ground points of all of the images that have been selected.
(12) In the embodiment described above, an example has been explained of the use of a computer 100 as the information processing apparatus. However, the present invention could also be applied to some other type of device that is provided with a storage device or a storage medium upon which image files are recorded, and with a display device for displaying those images, such as for example a digital camera or a portable telephone or the like.
(13) The program related to the control described above may be provide on a recording medium such as a CD-ROM or the like, or via a data signal such as the internet or the like. Fig. 13 is a figure showing this situation. The computer 100 receives supply of the program via a CD-ROM 300. Moreover, the computer 100 is endowed with a function of connection to a communication circuit 310. The computer 400 is a server computer that supplies the program described above, and stores this program upon a recording medium such as a hard disk or the like. The communication circuit 310 is a communication circuit for personal communication such as the internet or the like, or is a dedicated communication circuit or the like. The computer 400 uses the hard disk and reads out the program, and transmits the program to the computer 100 via the communication circuit 310. In other words, the program is conveyed by a carrier wave as a data signal, and is transmitted via the communication circuit 310. In this manner, the program may be supplied as a computer-readable computer program product in various ways, such as on a physical recording medium or via a carrier wave or the like.

It should be understood that, the present invention is not to be considered as being limited to the structures in the embodiment described above, provided that the distinguishing functions of the present invention are preserved. Furthermore, it would also be acceptable to combine various features of the embodiments and variant embodiments described above.

The above described embodiments are examples, and various modifications can be made without departing from the scope of the invention.

## Claims

1. An information processing apparatus, comprising:
an input means for inputting an image as an input image, the image being recorded in correlation with information related to ground point of photography;
an image selection means for selecting as selected images, a plurality of images from among the input images input by the input section;
a region extraction means for extracting a map region on the basis of a number of the selected images included in a predetermined region upon the map, the predetermined region including the ground points of the selected images selected by the image selection means; and
a display means for displaying the map region extracted by the region extraction means with photographic ground point signs, the photographic ground point manifesting the ground point of the selected image.

2. An information processing apparatus according to Claim 1, wherein
the region extraction means sets split regions as the predetermined regions, and extracts a plurality of the map regions from the map on the basis of the numbers of the photographic ground point signs within the split regions, the split region having been created by splitting the map at predetermined intervals.

3. An information processing apparatus according to Claim 2, further comprising:
a number of images display means for, for each of the split regions, displaying the number of the photographic ground point signs displayed within the split region.

4. An information processing apparatus according to Claim 1, wherein:
the region extraction means sets a predetermined size of a region as the predetermined region, and extracts the region from the map as the map regions, the number of the selected images in the region satisfying some predetermined condition.

5. An information processing apparatus according to any one of Claims 1 through 4, wherein:
the map regions that are displayed by the display means can be set by a user as desired,

6. An information processing apparatus according to any one of Claims 1 through 5, wherein:
sizes of the map regions that are extracted from the map by the region extraction means can be set by a user as desired.

7. An information processing apparatus according to any one of Claims 1 through 6, wherein:
the region extraction means extracts, as the map regions, regions for which the number of the selected images is greater than or equal to a number that has been set by a user.

8. An information processing apparatus according to any one of Claims 1 through 7, wherein:
the region extraction means extracts the plurality of map regions from the map while also taking into account a priority order assigned to each of the selected images within the predetermined regions upon the map.

9. An information processing apparatus according to any one of Claims 1 through 8, further comprising:
a change means for, on the basis of a command from the user, changing at least one of a scale of the map region displayed by the display means and a display range of the map region, on the basis of a command from a user.

10. An information processing apparatus according to any one of Claims 1 through 9, further comprising:
a map data acquisition means for specifying a country in which the selected images selected by the image selection means have been photographed, and acquires map data from a server in the specified country.

11. An information processing apparatus according to any one of Claims 1 through 10, wherein:
the region extraction means performs extraction so that the plurality of map regions do not overlap one another.

12. An information processing apparatus according to Claim 4, wherein:
the region extraction means extracts the region from the map, as the map regions, the numbers of the selected images in the region being a greatest.

13. An information processing apparatus according to Claim 2, wherein:
the region extraction means changes a size of the split regions according to level of a scale of the map being displayed.

14. An information processing apparatus according to Claim 1, wherein
the region extraction means sets split regions as the predetermined regions, and extracts the map region from the map on the basis of the numbers of the photographic ground point signs within the split regions, the split region having been created by splitting the map at predetermined intervals.

15. An information processing apparatus according to Claim 14, further comprising:
a number of images display means for, for each of the split regions, displaying the number of the photographic ground point signs displayed within the split region.

16. A computer readable program product including an information processing program that can be executed by the computer, the information processing program comprising:
an input process of inputting an input image as an input image, the image being recorded in correlation with information related to ground point of photography;
an image selection process of selecting, as selected images, a plurality of images from among the input images;
a region extraction process of extracting a plurality of map regions on the basis of a number of the selected images included in predetermined regions upon the map, the predetermined region including the ground points of the selected images selected by the image selection process; and
a display process of displaying the plurality of map regions that have been extracted by the region extraction process with the photographic ground point signs.
